# EUROPÄISCHE PATENTANMELDUNG

(11) **EP 2 899 632 A1**
(43) Veröffentlichungstag der Anmeldung: **29.07.2015**
(21) Anmeldenummer: 14197930.2
(22) Anmeldetag: 15.12.2014
(51) Int. Cl.: G06F 9/445

(54) **Verfahren zum nutzungsgesteuerten Update eines Softwareprodukts**

(30) Priorität: 28.01.2014 DE 102014001108
(71) Anmelder: Heidelberger Druckmaschinen AG, 69115 Heidelberg (DE)
(72) Erfinder: Redmer, Eberhard, 24326 Ascheberg (DE)

(57) **Zusammenfassung**

Verfahren zum nutzungsgesteuerten Update eines Softwareprodukts für eine Maschine mit einem Rechner, gekennzeichnet durch die folgenden Schritte:
• Sammeln von Arbeitskennzahlen über die Nutzung des Softwareprodukts, in Form eines kundenindividuellen Datensatzes, durch den Rechner
• Speichern des Datensatzes auf dem Rechner
• Ermittlung der Komponenten des Softwareprodukts die ein Update benötigen durch Auswertung des Datensatzes
• Durchführung der ermittelten Updates auf dem Rechner

## Beschreibung

Die vorliegende Erfindung betrifft ein Verfahren zum nutzungsgesteuerten Update eines Softwareprodukts mit den Merkmalen des Oberbegriffs von Anspruch 1.

Die Erfindung liegt in dem technischen Gebiet der Anwendungssoftwareentwicklung.

Der bisherige Stand der Technik kennt mehrere Arten von Updates. Neben manuellen Updates, wo der Anwender selbst eine neue Version der Software installiert, sind dies vor allem automatisierte Updates, welche ohne Zutun des Anwenders durchgeführt werden. Es sind auch Mischformen üblich, wo z.B. der Aktualisierungsvorgang zwar automatisiert abläuft, der Anwender aber gefragt wird, ob und/oder welche Teile des Updates er anwenden möchte.

Automatisierte Updates unterscheiden sich dabei sowohl in der Art, wie die notwendigen Daten übertragen werden, als auch in der Entscheidung, wann ein neues Update notwendig ist. Bei den gebräuchlichsten Verfahren wird dabei die Entscheidung, ob ein Update notwendig ist, anhand der Versionsnummer der Software getroffen. Für das Übertragungsverfahren gibt es mehrere Möglichkeiten: Das Updatepaket kann z.B. von einem Server manuell oder auch automatisiert heruntergeladen werden. Es kann auch ein aktiver Server eine Anzahl von Clients, auf denen die betreffende Zielsoftware läuft, abfragen und entsprechend aktualisieren. Der Übertragungsweg bei automatisierten Updates läuft immer über ein Netzwerk. Bzgl. des Übertragungsmediums sind sowohl leitungsgebundene Netzwerke (z.B. LAN oder ein Bussystem) als auch ein Funknetzwerk (z.B. Mobilfunk oder WLAN) sein. Die Art des Netzwerkes kann z.B. ein firmeninternes Netzwerk (Intranet) sein, die Updatepakete können aber auch direkt über das Internet übertragen werden, wenn es die zu aktualisierende Software darauf Zugriff hat.

Die Patentanmeldung DE 103 46 478 A1 z. B. offenbart ein System und Verfahren zum flexiblen Softwareupdate der Automatisierungssysteme über das Internet. Hierbei weist das Automatisierungssystem eine spezielle Softwarekomponente auf, die zum Sammeln und zur Weitergabe von Informationen über das Automatisierungssystem in standardisierter Form, z. B. als SML-Datei, vorgesehen ist. Die Softwarekomponente stellt die aktuelle Software- und/oder Hardwarekonfiguration des Automatisierungssystems, d. h. auf dem Rechner des Automatisierungssystems, fest. Durch die standardisierte Form der Informationssammlung bzw. Aufbereitung wird einerseits eine Integration in verschiedene Prozesse, z. B. für ein strukturiertes Fehlermanagement, ermöglicht und aufgrund der automatisierten Erfassung eine Entlastung der Serviceabteilungen erzielt. Die von der Softwarekomponente gesammelten Informationen über das Automatisierungssystem dienen insbesondere dem Abgleich der aktuellen Softwarekonfiguration eines Produkts mit empfohlenen Updates.

Die Nachteile dieses Stands der Technik sind dabei, dass bei einer Entscheidung über die Notwendigkeit eines Updates anhand der Versionsnummer der Software ein massiver Strom an unnützen Daten entsteht. Das bedeutet, dass oft Updates aufgespielt werden, die für den Anwender überhaupt nicht notwendig sind - zum Beispiel in Teilen der Software, die der Nutzer nicht verwendet oder wenn mit den Updates Fehler behoben werden, die den Nutzer nicht beeinträchtigen. Zudem werden notwendige Updates in ihrer Ausführung behindert, insbesondere wenn das zugehörige Netzwerk nur über geringe Datenübertragungsraten verfügt. Da zudem die Software meist während des UpdateVorgangs nicht benutzt werden kann, führen häufige unnötige Updates zu einer geringeren Verfügbarkeit. Wenn beim Betrieb der Software dann noch Produktionsprozesse anhängig sind, kann dies zu massiven wirtschaftlichen Schäden führen.

Die Aufgabe der vorliegenden Erfindung ist daher, ein Software-Update-Verfahren zu offenbaren, in welchem die Nutzung der Software durch den Anwender das entscheidende Kriterium für die Notwendigkeit eines Updates ist.

Die erfindungsgemäße Lösung dieser Aufgabe stellt dabei ein Verfahren mit den Merkmalen von Hauptanspruch 1 dar.

Ein Verfahren zum nutzungsgesteuerten Update eines Softwareprodukts, das die folgenden Schritte umfasst:
1. Sammeln von Arbeitskennzahlen über die Nutzung des Softwareprodukts, in Form eines kundenindividuellen Datensatzes, durch den Rechner
2. Speichern des Datensatzes auf dem Rechner
3. Ermittlung der Komponenten des Softwareprodukts die ein Update benötigen durch Auswertung des Datensatzes
4. Durchführung der ermittelten Updates auf dem Rechner

Das Hauptkennzeichen ist, dass bevorzugt nur jene Komponenten des Softwareprodukts ein Update erhalten, welche vom Anwender auch tatsächlich benutzt werden. Damit ist der Vorteil dieses Verfahren, dass sich die Anzahl der Updatevorgänge des Softwareprodukts auf ein notwendiges Minimum reduzieren lassen. Damit wird insbesondere die Zeit, in der die Software nicht produktiv eingesetzt werden kann, reduziert. Dies geschieht, indem Komponenten des Softwareprodukts Daten, im Weiteren Arbeitskennzahlen genannt, über ihre Nutzung erfassen. Das kann z.B. die Anzahl der Aufrufe während eines Arbeitsgangs, der Zeitpunkt der Nutzung oder die Dauer der Nutzung sein. Die Arbeitskennzahlen werden in einem Datensatz auf dem Rechner, auf welchem das Softwareprodukt arbeitet, abgespeichert. Dort können sie ausgewertet werden. Anhand dieser Auswertung wird ein individuelles Nutzungsprofil erstellt, mit welchem eine an die Bedürfnisse des Softwarebenutzers angepasste Installationsstrategie erstellt wird. D.h. nachdem alle für das Softwareprodukt verfügbaren Updatepakete zum Anwender übertragen wurden, wird anhand der Installationsstrategie bestimmt, welches Updatepaket zuerst, bzw. bevorzugt installiert werden soll.

Vorteilhafte und daher bevorzugte Weiterbildungen des Verfahrens ergeben sich aus den zugehörigen Unteransprüchen sowie aus der Beschreibung mit den zugehörigen Zeichnungen.

Eine bevorzugte Weiterbildung des erfindungsgemäßen Verfahrens ist dabei, dass der gespeicherte Datensatz an einen Server übertragen, dort in einer Nutzer-Informations-Datenbank gespeichert wird und die Auswertung des Datensatzes auf dem Server geschieht. Mit dieser Übertragung der Nutzungsdaten an einen zentralen Server werden weitergehende Analysen der Nutzungsdaten ermöglicht, die über eine einfache und auf dem lokalen Rechner erstellte Installationsstrategie hinausgehen. Daher ist die Übertragung der Daten an den Server die empfohlene Vorgehensweise. Einige Möglichkeiten sind im Folgenden aufgeführt.

Eine bevorzugte Weiterbildung des erfindungsgemäßen Verfahrens ist, dass die Nutzer-Informations-Datenbank mit den Nutzungsinformationen zur Fehleranalyse hinsichtlich Fernwartung benutzt werden kann. Liegen die Nutzungsdaten auf einem zentral zugreifbaren Server vor, so kann damit - je nach Aktualität der Datenbank - der Zustand des Softwareprodukts überwacht werden. Sollte der Anwender dies wünschen, ist damit eine Fernwartung möglich. Da erfahrungsgemäß im Softwarebereich die meisten Probleme durch eine Fehlkonfiguration auftreten, ließen sich eben solche Probleme aus der Ferne lösen, bzw. eine Fehlkonfiguration damit ausschließen. Die Folge ist eine Vermeidung unnötiger, weil durch Fehlbenutzung verursachter, Einsätze des Servicepersonals.

Eine bevorzugte Weiterbildung des erfindungsgemäßen Verfahrens ist dabei, dass durch Auswertung des Datensatzes ein optimaler Update-Zeitpunkt ermittelt wird und die Updates bevorzugt zu diesem Zeitpunkt durchgeführt werden.

Eine bevorzugte Weiterbildung des erfindungsgemäßen Verfahrens ist dabei, dass das Update bevorzugt zu Zeiten durchgeführt wird, wo ein Nichtbetrieb des Softwareprodukts die geringsten Kosten verursacht. Da eine möglichst hohe Auslastung der gesteuerten Maschinen wünschenswert ist, die Maschinen aber während eines Updates des, die Maschine zumindest indirekt steuernden, Softwareproduktes nicht benutzt werden können, ist es von Vorteil, die Updates dann durchzuführen, wenn die Auslastung der Maschine am geringsten ist. Damit lassen sich die Ausfallkosten der Maschine während des Updates reduzieren. Dies ist natürlich nicht der Fall, wenn mit dem Update ein Fehler behoben wird, welcher direkte Auswirkung auf das Produktionsergebnis hat. Die Abwägung zwischen Nutzung des Softwareprodukts und eventuellen Folgekosten durch ein fehlerhaftes Softwareprodukt, ermöglicht einen idealen Kompromiss zwischen aktualisiertem Softwareprodukt und geringen Ausfallkosten. Eine Auswertung der Nutzungsdaten ist damit Grundlage zur Ermittlung eines optimalen Zeitpunktes für ein Update.

Eine bevorzugte Weiterbildung des erfindungsgemäßen Verfahrens ist dabei, dass anhand der ausgewerteten Nutzer-Informations-Datenbank eine Prioritätsliste erstellt wird, welche Komponenten des Softwareprodukts bevorzugt ein Update erhalten sollen. Mit dieser Prioritätsliste wird erreicht, dass die für den jeweiligen Nutzer wichtigsten Komponenten zuerst aktualisiert werden. Welche Komponenten das sind, hängt von den durch das Softwareprodukt gesteuerten Maschinen sowie den individuellen Bedürfnissen des Anwenders ab.

Eine bevorzugte Weiterbildung des erfindungsgemäßen Verfahrens ist dabei, dass das Softwareprodukt mehrere Lizenzoptionen beinhaltet, von denen mindestens eine für den Nutzer freigeschaltet sein muss. Die Benutzung von Lizenzoptionen ermöglicht es, anhand der über die Arbeitskennzahlen gesammelten Nutzerinformationen, eine auf die individuellen Bedürfnisse des Anwenders abgestimmte Funktionalität des Softwareproduktes zusammenzustellen.

Eine weitere bevorzugte Weiterbildung des erfindungsgemäßen Verfahrens ist dabei, dass die Arbeitskennzahlen Informationen über die Nutzung der Lizenzoptionen, wie z. B. die Anteile der Aufrufe während eines Arbeitsgangs, den Zeitpunkt der Nutzung oder die Dauer der Nutzung enthalten. Diese Informationen ermöglichen es, z.B. den optimalen Updatezeitpunkt oder die Prioritätsliste zu erstellen.

Eine weitere bevorzugte Weiterbildung des erfindungsgemäßen Verfahrens ist, dass die Arbeitskennzahlen während der Bedienung des Softwareprodukts von den freigeschalteten Lizenzoptionen in die Datenbank geschrieben werden. Nur die freigeschalteten Lizenzoptionen können Arbeitskennzahlen zur
Nutzung beitragen. Die Arbeitskennzahlen von freigeschalteten, aber nicht benutzten Lizenzoptionen beschränken sich auf Zustandsdaten und die Information über die Nichtbenutzung.

Eine bevorzugte Weiterbildung des erfindungsgemäßen Verfahrens ist, dass die Entscheidung welche Komponenten des Softwareprodukts ein Update erhalten, entweder automatisch ermittelt oder auch lokal im Softwareprodukt vom Anwender selbst getroffen wird. Zur Erhöhung der Benutzerfreundlichkeit ist es möglich, dass der Anwender, neben der Variante der über das angemeldete Verfahren ermittelten nutzerindividuellen Updates, auch eine eigene Installationsstrategie konfigurieren kann. Ein mögliches Beispiel ist die grundsätzliche Übernahme aller verfügbaren Updates.

Eine bevorzugte Weiterbildung des erfindungsgemäßen Verfahrens ist, dass besagtes Computerprogrammprodukt auf externen Rechnern betrieben und gewartet wird, über ein Netzwerk vom lokalen Anwender bedient werden kann und über besagtes Netzwerk die lokalen Maschinen und Geräte steuert. Das bedeutet es ist möglich, dass das Softwareprodukt als Systemsoftware vom Anbieter des Softwareproduktes auf einem Server installiert, betrieben und auch gewartet wird. Der eigentliche Anwender kann das Softwareprodukt über eine grafische Benutzeroberfläche bedienen, welche remote über eine sichere Netzwerkverbindung mit dem Softwareprodukt verbunden ist. Über diese sichere Netzwerkverbindung werden dann auch die lokalen Maschinen beim Anwender gesteuert.

Das Verfahren sowie funktionell vorteilhafte Weiterbildungen des Verfahrens werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Fig. 1:: grundlegendes Prinzip, wie die Arbeitskennzahlen aus dem Softwareprodukt ermittelt werden
- Fig. 2:: Ablauf der Erfassung der Arbeitskennzahlen im Softwareprodukt
- Fig. 3:: Ablauf der Nutzerdatenerfassung im Softwareprodukt
- Fig. 4:: Ablauf eines Softwareupdatebeispiels

Das Softwareprodukt 4, nachfolgend als Layoutprogramm 3 bezeichnet, wird als monolithisches Programm auf dem Kundenrechner 21 installiert. Für die Benutzung des Layoutprogramms 3 sind sogenannte Lizenzoptionen 5 von Bedeutung. Diese bestimmen das Funktionsspektrum des Layoutprogramms 3 und müssen vom Anwender mit käuflich erworbenen Lizenzen freigeschalten werden. Beispiele für solche Optionen sind zum Beispiel der Sheetoptimizer 6, der Barcodegenerator 7 oder der Gang-Assistant 8.

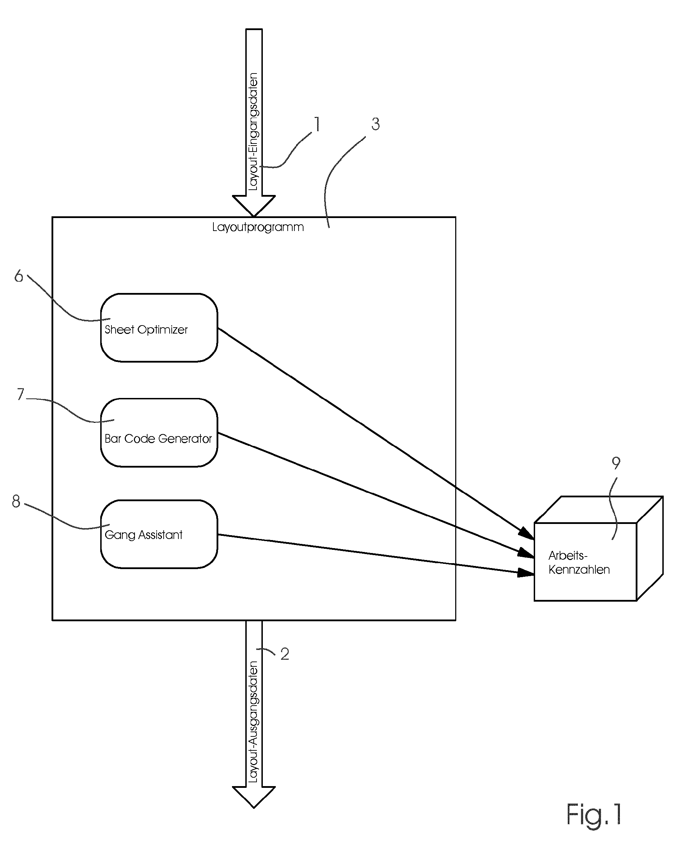

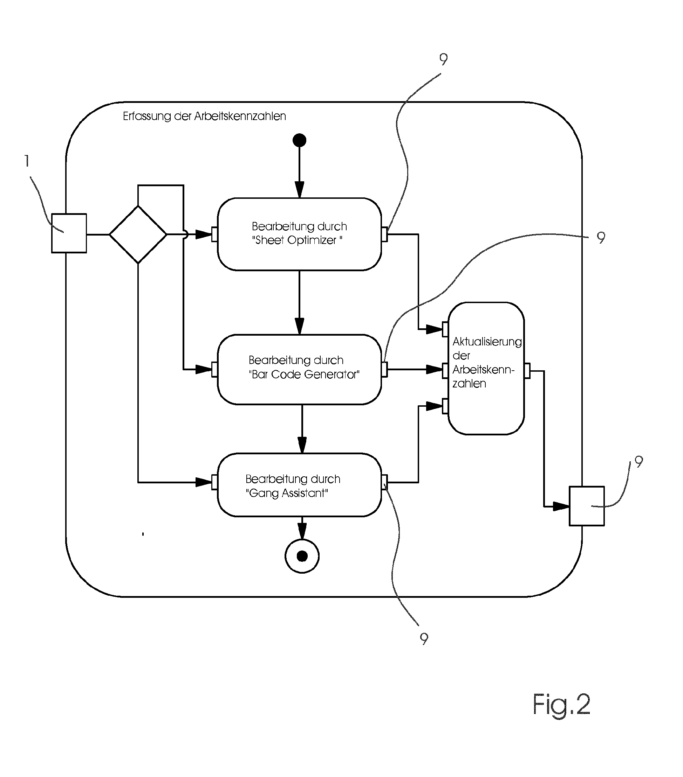

Im Betrieb wird dann, wie in Figur 1 ersichtlich, bei jedem Arbeitsablauf aufgrund von Anforderungen aus den Layouteingangsdaten 1 und den Bedienoperationen des Layoutprogramms 3 entschieden, welche der Lizenzoptionen 5 benutzt werden, um die gewünschten Layoutausgangsdaten 2 zu erzeugen. Dabei erfassen die im Layoutprogramm 3 enthaltenen Lizenzoptionen 5, also Sheetoptimizer 6, Barcodegenerator 7 und/oder der Gang-Assistant 8, die Arbeitskennzahlen 9. Wichtige Kennzahlen 9 sind z.B. die Anzahl der Aufrufe während eines Arbeitsgangs, der Zeitpunkt der Nutzung und die Zeitdauer der Nutzung. Der Vorgang der Erfassung der Arbeitskennzahlen 9 ist in Figur 2 grafisch verdeutlicht. Es tragen nur aktivierte und benutzte Lizenzoptionen 5 zur Erfassung bei.

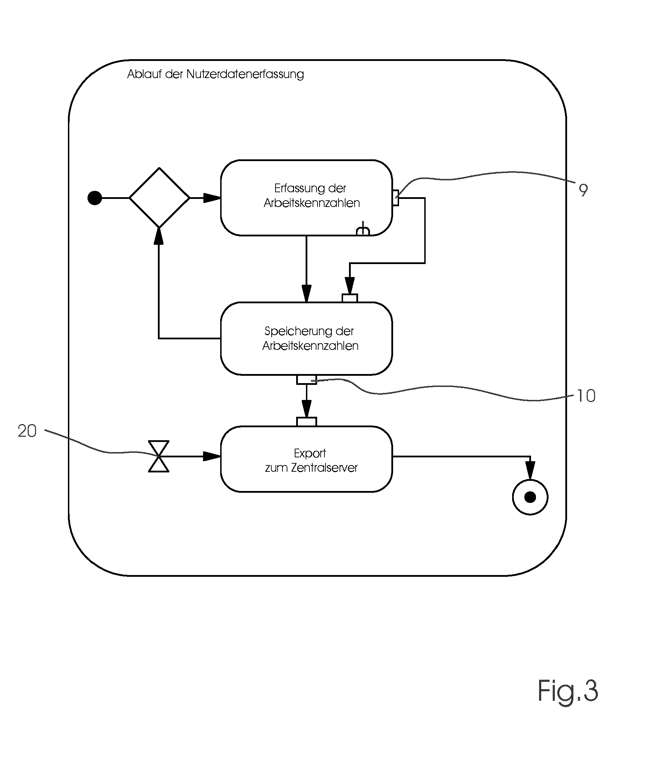

Die Arbeitskennzahlen 9 werden, wie in Figur 3 ersichtlich, gesammelt (der Verfahrensschritt "Erfassung der Arbeitskennzahlen" entspricht dabei dem in Figur 2 verdeutlichten Vorgang) und ergeben die kundenindividuellen Nutzungsdaten 10. Diese werden kontinuierlich in einem bestimmten Zeitintervall 20 an einen Server 16 übertragen, der vom Anbieter des Layoutprogramms 3 verwaltet wird. Dort werden sie in einer Nutzer-Informations-Datenbank 11 abgelegt. Daraus lassen sich dann kundenspezifische Installationsstrategien 10, z.B. in Form einer Prioritätsliste 15 für mögliche Updatepakete 13, ableiten. Das heißt, dass Komponenten, die nicht benutzt werden, auch bei der Beseitigung von kritischen Fehlern nicht sofort ein entsprechendes Update benötigen. Zudem kann aus den realen Nutzungsinformationen 10, insbesondere des Nutzungszeitraumes, auch ein optimaler Zeitraum für ein automatisiertes Update ermittelt werden. Damit ist eine Aktualisierung des Layoutprogramms 3 ohne oder mit minimaler Produktionsbeeinträchtigung möglich.

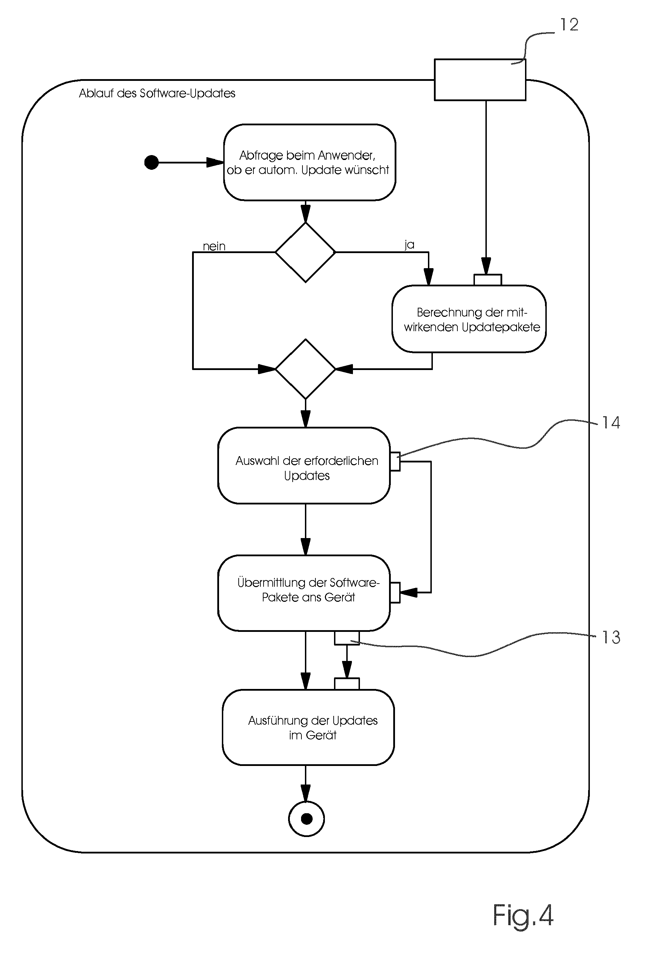

Der grundlegende Ablauf eines Updatevorgangs ist in Figur 4 verdeutlicht. Zuerst wird ermittelt ob der Anwender ein automatisiertes Update wünscht. Die Alternative wäre ein vollständiges Update aller vorhandenen Update-Pakete 13 oder die Nutzung einer lokal vom Anwender erstellten Prioritätsliste 15. Die Abfrage kann z.B. in Form einer Konfiguration oder einer direkten Abfrage des Anwenders über die grafische

Benutzeroberfläche 19 geschehen. Wird ein automatisiertes Update gewünscht, wird die vorher vom Anbieter des Layoutprogramms 3 zusammen mit den Update-Paketen an den Anwender gesendete Installationsstrategie 12 benutzt, um die für das Update notwendigen Update-Pakete 13 zu ermitteln. Diese Pakete 13 werden dann ausgewählt und das entsprechende Layoutprogramm 3 aktualisiert.

Die ermittelten Nutzungsdaten 10 können des Weiteren auch zur Analyse des Kundenprozesses benutzt werden. Das heißt, es kann ermittelt werden, ob der Anwender alle installierten Lizenzoptionen 5 auch wirklich benötigt oder ob er weitere Lizenzoptionen 5, die er noch nicht hat, für seinen optimalen Betrieb braucht.

Zudem lassen sich die Nutzungsdaten 10 auch zur Fehleranalyse und Fernwartung beim Anwender benutzen. Insbesondere Fehlkonfigurationen sind oft eine Hauptfehlerquelle bei der Benutzung von Softwareprodukten, so dass eine Fernanalyse der Konfiguration oft schon ausreicht um auftretende Fehler zu identifizieren. Damit lässt sich die Zahl der notwendigen Service-Einsätze massiv reduzieren. Auch viele andere Fehler können so bereits aus Ferne diagnostiziert werden - z.B. durch Auswertung von Zustandsinformation der durch das Layoutprogramm 3 gesteuerten Maschine.

### Bezugszeichenliste

- 1: Layouteingangsdaten
- 2: Layoutausgangsdaten
- 3: Layoutprogramm
- 4: Softwareprodukt
- 5: Lizenzoptionen
- 6: Lizenzoption "Sheet Optimizer"
- 7: Lizenzoption "Bar Code Generator"
- 8: Lizenzoption "Gang Assistent"
- 9: Arbeitskennzahlen
- 10: Kundenindividuelle Nutzungsdaten
- 11: Nutzer-Informations-Datenbank
- 12: Installationsstrategie
- 13: Update-Paket
- 14: Update-Paket-Informationen
- 15: Prioritätsliste
- 16: Server
- 17: Netzwerk
- 18: Sichere Netzwerkverbindung
- 19: Grafische Benutzeroberfläche
- 20: Zeitintervall
- 21: Rechner

## Patentansprüche

1. Verfahren zum nutzungsgesteuerten Update eines Softwareprodukts (4) für eine Maschine mit einem Rechner (21), **gekennzeichnet durch** die folgenden Schritte:
• Sammeln von Arbeitskennzahlen (9) über die Nutzung des Softwareprodukts (4), in Form eines kundenindividuellen Datensatzes (10), **durch** den Rechner (21)
• Speichern des Datensatzes (10) auf dem Rechner (21)
• Ermittlung der Komponenten des Softwareprodukts (4) die ein Update benötigen **durch** Auswertung des Datensatzes (10)
• Durchführung der ermittelten Updates auf dem Rechner (21)

2. Verfahren nach Anspruch 1,
**dadurch gekennzeichnet,**
**dass** der gespeicherte Datensatz (10) an einen Server (16) übertragen, dort in einer Datenbank (11) gespeichert wird und die Auswertung des Datensatzes (10) auf dem Server (16) geschieht.

3. Verfahren nach Anspruch 2,
**dadurch gekennzeichnet,**
**dass** die Datenbank (11) mit den Nutzungsinformationen zur Fehleranalyse hinsichtlich Fernwartung benutzt wird.

4. Verfahren nach Anspruch 1 oder Anspruch 2,
**dadurch gekennzeichnet,**
**dass** durch Auswertung des Datensatzes (10) ein optimaler Update-Zeitpunkt ermittelt wird und die Updates bevorzugt zu diesem Zeitpunkt durchgeführt werden.

5. Verfahren nach Anspruch 4,
**dadurch gekennzeichnet,**
**dass** das Update bevorzugt zu Zeiten durchgeführt wird, wo ein Nichtbetrieb des Softwareprodukts (4) die geringsten Kosten verursacht.

6. Verfahren nach einem der vorhergehenden Ansprüche,
**dadurch gekennzeichnet,**
**dass** anhand des ausgewerteten Datensatzes (10) eine Prioritätsliste (15) erstellt wird, welche Komponenten des Softwareprodukts (4) bevorzugt ein Update erhalten sollen.

7. Verfahren nach einem der vorhergehenden Ansprüche,
**dadurch gekennzeichnet,**
**dass** das Softwareprodukt (4) mehrere Lizenzoptionen (5) beinhaltet, von denen mindestens eine vom Nutzer freigeschaltet sein muss.

8. Verfahren nach Anspruch 7,
**dadurch gekennzeichnet,**
**dass** die Arbeitskennzahlen (9) Informationen über die Nutzung der Lizenzoptionen (5) wie Anzahl der Aufrufe während eines Arbeitsgangs, Zeitpunkt der Nutzung oder Dauer der Nutzung enthalten.

9. Verfahren nach Anspruch 7 oder Anspruch 8,
**dadurch gekennzeichnet,**
**dass** die Arbeitskennzahlen (9) während der Bedienung des Softwareprodukts (4) von den freigeschalteten Lizenzoptionen (5) in den Datensatz (10) geschrieben werden.

10. Verfahren nach einem der vorhergehenden Ansprüche,
**dadurch gekennzeichnet,**
**dass** die Entscheidung welche Komponenten des Softwareprodukts (4) ein Update erhalten, entweder automatisch ermittelt oder lokal im Softwareprodukt (4) vom Anwender selbst getroffen wird.
